(19) **Europäisches Patentamt** / **European Patent Office** / **Office européen des brevets**

(11) **EP 3 563 178 B1**

(12) **FASCICULE DE BREVET EUROPEEN**

(45) Date de publication et mention de la délivrance du brevet:
**27.10.2021 Bulletin 2021/43**

(51) Int Cl.:
*G01S 17/34* *(2020.01)*    *G01S 7/481* *(2006.01)*
*G01S 7/4915* *(2020.01)*    *G01S 7/4913* *(2020.01)*

(21) Numéro de dépôt: **17825554.3**

(22) Date de dépôt: **28.12.2017**

(86) Numéro de dépôt international:
**PCT/EP2017/084754**

(87) Numéro de publication internationale:
**WO 2018/122339 (05.07.2018 Gazette 2018/27)**

(54) **MÉTHODE DE TRAITEMENT D'UN SIGNAL ISSU D'UN LIDAR COHÉRENT POUR RÉDUIRE LE BRUIT ET SYSTÈME LIDAR ASSOCIÉ**

**VERFAHREN ZUR VERARBEITUNG EINES SIGNALS AUS EINEM KOHÄRENTEN LIDAR ZUR GERÄUSCHREDUKTION UND ZUGEHÖRIGES LIDAR-SYSTEM**

**METHOD FOR PROCESSING A SIGNAL FROM A COHERENT LIDAR IN ORDER TO REDUCE NOISE AND RELATED LIDAR SYSTEM**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2016 FR 1601875**

(43) Date de publication de la demande:
**06.11.2019 Bulletin 2019/45**

(73) Titulaire: **Thales**
**92400 Courbevoie (FR)**

(72) Inventeurs:
• **PILLET, Grégoire**
**78851 Elancourt Cedex (FR)**
• **FENEYROU, Patrick**
**91430 Igny (FR)**

(74) Mandataire: **Marks & Clerk France**
**Immeuble "Visium"**
**22, avenue Aristide Briand**
**94117 Arcueil Cedex (FR)**

(56) Documents cités:
**US-A1- 2008 018 881    US-A1- 2015 293 211**

• **AMZAJERDIAN FARZIN ET AL: "Lidar systems for precision navigation and safe landing on planetary bodies", INTERNATIONAL SYMPOSIUM ON PHOTOELECTRONIC DETECTION AND IMAGING 2011: LASER SENSING AND IMAGING; AND BIOLOGICAL AND MEDICAL APPLICATIONS OF PHOTONICS SENSING AND IMAGING, SPIE, 1000 20TH ST. BELLINGHAM WA 98225-6705 USA, vol. 8192, no. 1, 9 juin 2011 (2011-06-09) , pages 1-7, XP060016360, DOI: 10.1117/12.904062 cité dans la demande**
• **PETER ADANY ET AL: "Chirped Lidar Using Simplified Homodyne Detection", JOURNAL OF LIGHTWAVE TECHNOLOGY, IEEE SERVICE CENTER, NEW YORK, NY, US, vol. PP, no. 16, 15 août 2009 (2009-08-15) , pages 3351-3357, XP011256342, ISSN: 0733-8724**
• **ABDELAZIM SAMEH ET AL: "Development and Operational Analysis of an All-Fiber Coherent Doppler Lidar System for Wind Sensing and Aerosol Profiling", IEEE TRANSACTIONS ON GEOSCIENCE AND REMOTE SENSING, IEEE SERVICE CENTER, PISCATAWAY, NJ, US, vol. 53, no. 12, 1 décembre 2015 (2015-12-01), pages 6495-6506, XP011668211, ISSN: 0196-2892, DOI: 10.1109/TGRS.2015.2442955 [extrait le 2015-09-04]**

**Description**

**DOMAINE DE L'INVENTION**

L'invention concerne le domaine des lidars cohérents.

**ETAT DE LA TECHNIQUE**

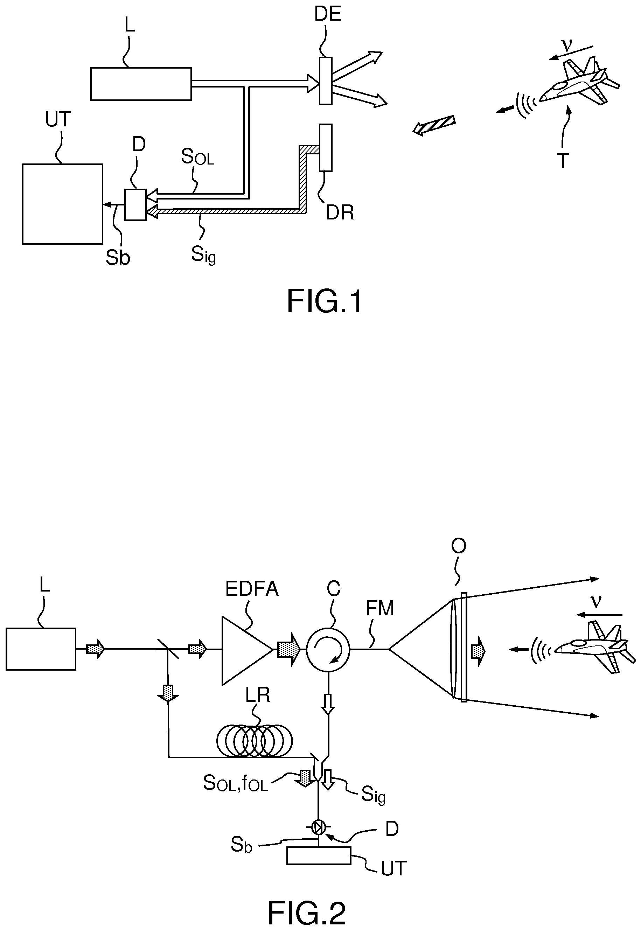

Le principe d'un lidar cohérent est bien connu de l'état de la technique et illustré figure 1. Un lidar cohérent comprend une source cohérente L, typiquement un laser, qui émet une onde lumineuse cohérente (domaine IR, visible ou UV proche), un dispositif d'émission DE qui permet d'illuminer un volume de l'espace, et un dispositif de réception DR, qui collecte une fraction de l'onde lumineuse rétrodiffusée par une cible T. Le décalage de fréquence Doppler $\nu_{Dop}$ de l'onde rétrodiffusée est fonction de la vitesse radiale v de la cible T :

$\nu_{Dop}$ = 2v/λ λ longueur d'onde du laser

A la réception on effectue un mélange entre l'onde lumineuse rétrodiffusée reçue Sig de fréquence signal fs et une partie de l'onde émise $S_{OL}$ dénommée onde OL pour « oscillateur local » qui présente une fréquence d'oscillateur local $f_{OL}$. L'interférence de ces deux ondes est détectée par un photodétecteur D, et le signal électrique en sortie du détecteur présente un terme oscillant dénommé signal de battement Sb, en plus des termes proportionnels à la puissance reçue et à la puissance d'oscillateur local. Une unité de traitement UT numérise ce signal et en extrait une information de localisation de la cible T. Cette information de localisation de la cible est préférentiellement une information de vitesse v, et/ou une information de position (avec un signal émis particulier décrit plus loin), voire une information de présence et/ou de vibration.

Préférentiellement l'unité de traitement UT filtre électroniquement le signal de battement Sb dans une bande étroite centrée sur la fréquence nulle.

Pour les lidars cohérents, les dispositifs d'émission et de réception utilisent préférentiellement une même optique (lidar monostatique), tel qu'illustré figure 2. Cette caractéristique permet d'obtenir une bonne stabilité mécanique et de réduire l'influence des turbulences atmosphériques à longue distance, les trajets de propagation des ondes incidente et rétrodiffusée étant confondus.

Le signal optique à l'émission est amplifié par un amplificateur EDFA, puis transporté pour l'émission par une fibre optique monomode FM. Les voies d'émission et de réception utilisent une même optique O et sont séparées à l'aide d'un circulateur C. Ce signal optique peut éventuellement être décalé en fréquence, par exemple à l'aide d'un modulateur acousto-optique qui est préférentiellement positionné avant l'amplificateur EDFA mais peut également être positionné sur le trajet de l'oscillateur local. Une ligne à retard LR permet d'égaliser les chemins optiques de l'oscillateur local et du signal d'émission de manière à filtrer, dans le domaine RF, les défauts des composants optiques placés après l'amplificateur EDFA (défaut de cross-talk du circulateur C, imperfections des traitements anti-reflet de l'optique d'émission/réception O,...).

Le signal de battement présente une composante d'intérêt S et un bruit B :

$$Sb = S+B.$$

Une fois détecté, il est numérisé selon une fréquence d'échantillonnage.

Afin de remonter à l'information de vitesse, on calcule, sur un intervalle de temps donné, une transformée dans le domaine fréquentiel du signal de battement numérisé, typiquement une transformée de Fourier, puis on détermine la densité spectrale de puissance DSP, correspondant à la norme (module au carré) de cette transformée.

$$DSP = \left| TF\left[ S + B \right] \right|^2$$

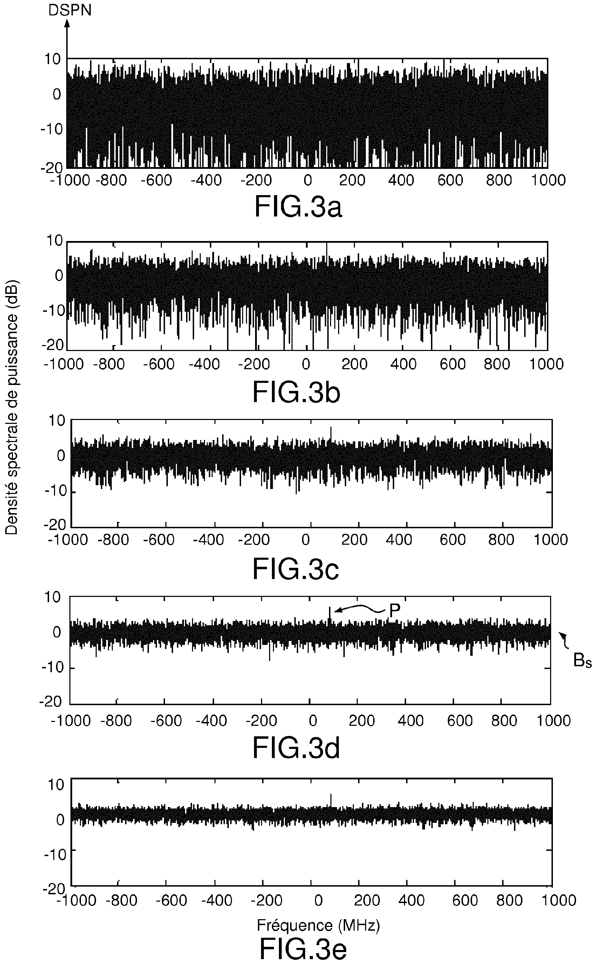

Le signal d'intérêt est constitué d'un pic P (illustré figure 3). La densité DSP présente également un « plancher » de bruit qui correspond, pour un lidar dimensionné correctement, au bruit de photon (bruit relié à la statistique d'arrivée des photons détectés, également dénommé bruit de grenaille lié à la puissance de l'oscillateur local. Le signal issu de la cible rétrodiffusée étant très faible devant le signal d'oscillateur local, seul le bruit de photon de ce dernier intervient

Le bruit de photon Bph s'exprime comme :

$$Bph=2.e.\eta.Popt.BA$$

Avec

e charge de l'électron, η rendement du détecteur, Popt puissance optique incidente sur le détecteur et BA bande d'analyse de la densité spectrale de puissance, typiquement comprise entre 0.1 Hz et 100 MHz en fonction du type de détecteur.

Ce bruit lorsqu'exprimé dans le domaine spectral, présente une variation aléatoire et :

- une ligne de base correspondant à une valeur moyenne ou espérance B0,
- une variance V qui limite la sensibilité du lidar (liée à la capacité du système à détecter le ou les pics de fréquence).

Pour une meilleure lisibilité compte tenu de la dynamique accessible au lidar, on calcule une densité spectrale DSPN normalisée par la moyenne de la densité spectrale de puissance de bruit, et on la représente selon une échelle logarithmique :

$$DSPN = \frac{\left|TF[S+B]\right|^2}{<\left|TF[B]\right|^2>} = \frac{\left|TF[S+B]\right|^2}{B0}$$

On définit classiquement deux grandeurs caractéristiques du bruit :

- Le SNR ou Signal Noise Ratio défini comme la puissance du pic P sur la variance du bruit V:

$$SNR = P/V$$

- Le contraste C du pic défini comme la valeur du pic sur la moyenne du bruit

$$C = P/B0$$

Afin de réduire le bruit, on réalise n calculs de DSP (ou de DSPN) sur n intervalles de temps ti et on effectue une moyenne. Du fait du caractère aléatoire du bruit, il est connu que le fait de calculer une moyenne sur n valeurs de DSP permet de réduire la variance du bruit V, mais pas son espérance (valeur moyenne).

L'évolution de la densité spectrale normalisée DSPN en fonction du nombre de valeurs n utilisées pour calculer la moyennes est illustré figure 3. Les figures 3a, 3b, 3c 3d et 3e correspondent respectivement à n=1, n=2, n=5, n=10 et n=20. Le pic P sort progressivement du bruit. La variance V du bruit diminue également, mais pas sa valeur moyenne. Donc le SNR est proportionnel à n alors que le contraste reste constant.

Avec le traitement selon l'état de la technique décrit précédemment, lorsque n augmente, la variance V diminue, et donc le SNR augmente, ce qui améliore la performance de détection, tandis que l'espérance, indépendante de n, ne diminue pas, et le contraste n'est pas amélioré par le traitement.

En effet les échantillons d'une transformée de Fourier sont décrits par une variable aléatoire complexe centrée. Un périodogramme (densité spectrale de puissance élémentaire) présente donc une statistique exponentielle décroissante (une loi du $\chi^2$ d'ordre 2) et l'accumulation de n périodogrammes indépendants est donc décrite par une distribution $\chi^2$ d'ordre 2n (de fonction de répartition la fonction Gamma incomplète d'ordre 2n). L'espérance de la distribution $\chi^2$ d'ordre 2n est 2n et sa variance est de 4n.

En moyennant en puissance les n périodogrammes (on divise l'accumulation par n et donc chaque densité spectrale de puissance par n), on divise la variance du bruit par $n^2$. La variance de la moyenne en puissance de n densités spectrales de puissance DSPi est donc proportionnelle à 1/n (ou l'écart type est proportionnel à 1/sqrt(n)) mais son espérance est indépendante de n.

Une solution pour limiter le bruit de photon est de limiter la puissance de l'oscillateur local mais cela conduit également à réduire la sensibilité du lidar, car réduire la puissance réduit également l'intensité des pics. Et le rapport signal sur bruit est indépendant de la puissance de l'oscillateur local puisque la puissance du signal de battement est elle-même proportionnelle à la puissance de l'oscillateur local.

A partir de la densité spectrale de puissance finale, on détermine la ou les fréquences correspondant au(x) pic(s), et on en déduit de manière classique une information de vitesse axiale v de la cible, et éventuellement une information de distance d (voir plus loin modulation de fréquence).

On connait de l'état de la technique l'utilisation d'une détection dite équilibrée ou « balancée » («balanced» en anglais) pour supprimer le bruit d'intensité de la source cohérente $B_{OL}$. Ce bruit provient de l'émission spontanée et des perturbations extérieures de la cavité laser. La variance de ce bruit est proportionnelle au carré de la puissance de l'oscillateur local $P_{OL}$ :

$$\left\langle i_{RIN}^2 \right\rangle = \rho^2 \int_B 10^{RIN(f)/10} P_{OL}^2 \, df$$

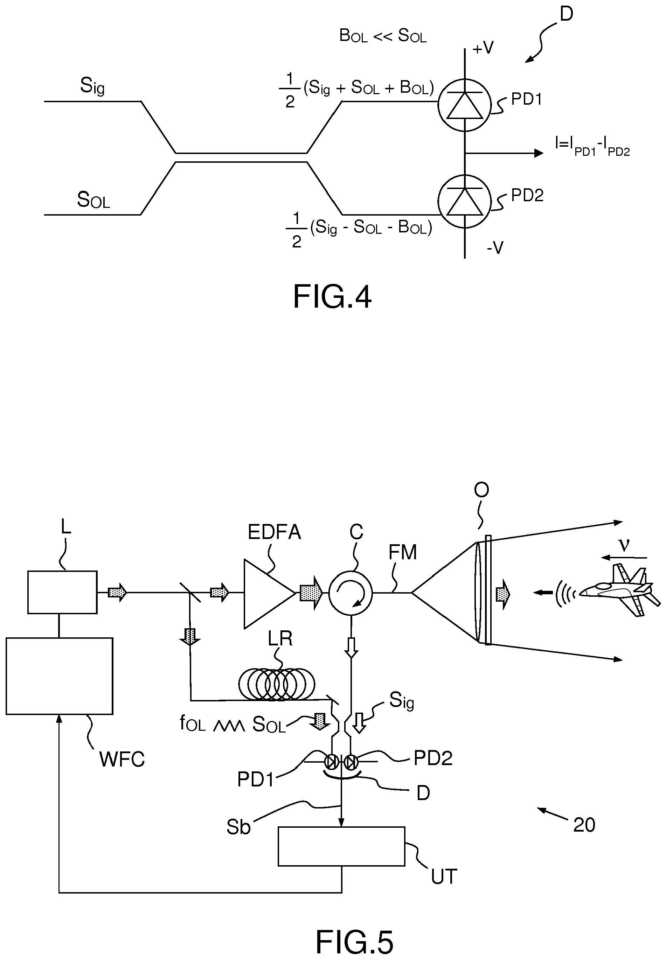

Pour cela, on utilise un détecteur D équilibré ou « balancé », constitué de deux détecteurs PD1 et PD2 tel qu'illustré figure 4. Les signaux $S_{OL}$ et Sig sont répartis entre les deux détecteurs de la manière décrite sur la figure 4, et on effectue la différence des intensités reçues par les deux détecteurs :

$$I_{PD_1} = \frac{\eta}{4}\left(Sig + S_{OL} + B_{OL}\right)^2 \approx \frac{\eta}{4}\left(Sig^2 + S_{OL}^2 + B_{OL}^2 + 2Sig.S_{OL} + 2Sig.B_{OL} + 2.S_{OL}.B_{OL}\right)$$

$$I_{PD_2} = \frac{\eta}{4}\left(Sig - S_{ol} - B_{ol}\right)^2 \approx \frac{\eta}{4}\left(Sig^2 + S_{OL}^2 + B_{OL}^2 - 2Sig.S_{OL} - 2Sig.B_{OL} + 2.S_{OL}.B_{OL}\right)$$

Avec $\eta$ rendement du détecteur.

On calcule l'intensité I :

$$I = I_{PD1} - I_{PD2} = \eta \, (Sig. \, S_{OL} + Sig. \, B_{OL})$$

On réduit par ce montage l'influence du bruit d'intensité du laser. Celui-ci restant inférieur au signal $S_{OL}$ associé à l'oscillateur local, le produit $Sig.B_{OL}$ peut être négligé devant $Sig.S_{OL}$. On retrouve donc le battement $Sig.S_{OL}$.

Ce type de détecteur balancé nécessite un équilibrage précis entre les sensibilités de deux photodiodes et le taux de couplage du coupleur permettant de diviser l'intensité en deux voies. Il peut être utilisé pour tout type de lidar, et plus particulièrement pour tout type de lidar cohérent, mais il ne réduit que le bruit d'intensité de la source et pas le bruit de photon issu de la détection de l'oscillateur local.

Le document US20150293211A1 décrit un Lidar avec deux détecteurs pour augmenter le rapport signal bruit du récepteur.

On connait également de l'état de l'art une solution pour la télémétrie/vélocimétrie par lidar qui consiste à réaliser un système lidar à modulation de fréquence. Cette technique, classique en radar, trouve un intérêt particulier actuellement compte tenu des progrès des sources lasers fibrées. Grâce à la modulation de fréquence, une analyse temps/fréquence permet de remonter à la distance d (le retard $\tau_0$ du signal rétrodiffusé par la cible par rapport à l'oscillateur local est fonction de la distance d) et à sa vitesse v. Ce type de lidar permet également de réaliser une fonction d'anémométrie laser.

Un exemple d'architecture optique d'un lidar à modulation de fréquence utilisant un détecteur balancé D (comprenant un détecteur PD1 et un détecteur PD2), est décrit figure 5. La source cohérente est modulée en fréquence de manière à ce que la fréquence de l'oscillateur local $f_{OL}(t)$ soit modulée selon une fonction prédéterminée $f_{mod}(t)$ dénommée forme d'onde dont le contrôle est assuré par le module WFC, synchronisé avec l'unité de traitement UT. La fréquence de l'oscillateur local s'exprime alors :

$$f_{OL}(t) = f0 + f_{mod}(t)$$

Avec f0 fréquence moyenne du laser L

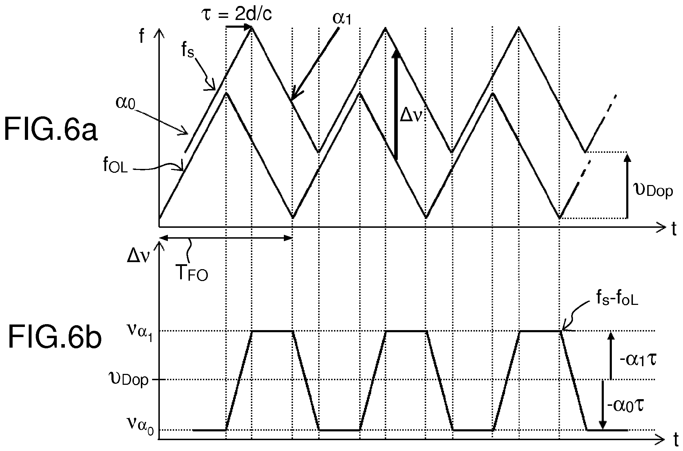

Un exemple d'un lidar cohérent à modulation de fréquence est décrit dans le document « Lidar systems for precision navigation and safe landing on planetary bodies » Farzin Amzajerdian et al, Proc. SPIE 8192, International Symposium on Photoelectronic Détection and Imaging 2011: Laser Sensing and Imaging; and Biological and Médical Applications of Photonics Sensing and Imaging, 819202 (August 19, 2011). La fréquence de l'oscillateur local $f_{OL}$ est modulée linéairement selon deux pentes de fréquence $\alpha_0$ et $\alpha_1$ de manière périodique de période $T_{FO}$. La figure 6 illustre la variation au cours du temps des fréquences d'oscillateur local $f_{OL}(t)$ et de signal $f_s(t)$. Comme illustré sur la figure 6a, le signal rétrodiffusé de fréquence $f_s(t)$ est décalé temporellement d'un temps $\tau$ du fait de la propagation jusqu'à la zone de mesure (cible T) et donc relié à la distance de la cible d, et est décalé en fréquence d'une valeur $v_{Dop}$ du fait de l'effet Doppler par rapport à la fréquence oscillateur local $f_{OL}(t)$.

Le signal de battement détecté Sb présente une composante de fréquence positive fs-f$_{OL}$. La figure 6b illustre l'évolution au cours du temps de fs —f$_{OL}$. On constate que cette différence de fréquence comprend en fonction du temps deux séries de plateaux aux fréquences caractéristiques $\nu_{\alpha 0}$ et $\nu_{\alpha 1}$, directement reliées à la distance D de la cible et à sa vitesse v radiale par les équations :

$$\nu_{\alpha_0} = \frac{2\,\mathrm{v}}{\lambda} - \frac{2\alpha_0 D}{c} \quad \text{et} \quad \nu_{\alpha_1} = \frac{2\,\mathrm{v}}{\lambda} - \frac{2\alpha_1 D}{c}$$

En mesurant ces deux fréquences caractéristiques $\nu_{\alpha 0}$ et $\nu_{\alpha 1}$ du signal de battement Sb, par exemple en réalisant une transformée de Fourier de celui-ci, tel que décrit ci-dessus, on remonte à d et v.

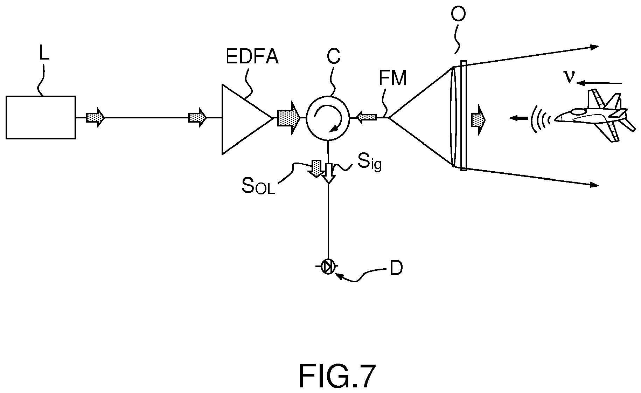

L'homme de l'art connait également une autre architecture de lidar cohérent illustrée figure 7 dans laquelle le signal d'oscillateur S$_{OL}$ est prélevé grâce à une réflexion en bout de fibre.

Un but de la présente invention est de pallier les inconvénients précités en proposant une méthode de traitement du signal de battement et une architecture de détection spécifique associée permettant de réduire le bruit de photons provenant de la détection du signal d'oscillateur local compatible avec l'utilisation d'un détecteur balancé et pouvant s'implémenter sur tout lidar cohérent.

## DESCRIPTION DE L'INVENTION

La présente invention a pour objet une méthode de traitement d'un signal issu d'un lidar cohérent comprenant une source cohérente, la méthode comprenant les étapes consistant à :

- générer un premier signal de battement et un deuxième signal de battement respectivement à partir d'un premier ensemble de détection et d'un deuxième ensemble de détection, chaque signal de battement étant issu d'une interférence entre un signal d'oscillateur local issu de la source cohérente et un signal rétrodiffusé par une cible éclairée par le lidar, puis numériser ces signaux de battement,
- pour une pluralité de n intervalles temporels, déterminer n valeurs respectives de densité spectrale à partir d'une transformée dans le domaine fréquentiel de la corrélation croisée entre le premier et le deuxième signal de battement,
- déterminer une valeur moyenne de la densité spectrale à partir desdites n valeurs de densité spectrale,
- déterminer une information de localisation de la cible à partir de la valeur moyenne de ladite densité spectrale.

Selon un mode de réalisation l'étape de détermination de n valeurs de la densité spectrale comprend les sous étapes consistant à :

- déterminer une première valeur d'une transformée dans le domaine fréquentiel du premier signal de battement,
- déterminer une deuxième valeur du conjugué d'une transformée dans le domaine fréquentiel du deuxième signal de battement,

la valeur de la densité spectrale étant déterminée à partir du produit de la première et de la deuxième valeur.

Selon une variante la source cohérente est modulée périodiquement en fréquence de sorte que le signal d'oscillateur local présente une fréquence d'oscillateur local constituée de la somme d'une valeur moyenne et d'une fréquence de modulation issue de la modulation de la source, la fréquence de modulation étant périodique selon une période de modulation, et dans laquelle les intervalles temporels sont inférieurs ou égaux à la période de modulation, la méthode de traitement comprenant en outre une étape consistant à déterminer une information de distance de la cible à partir de la valeur moyenne de la densité spectrale.

Préférentiellement chaque période de modulation de la fréquence de modulation comprend n parties linéaires présentant respectivement n pentes de fréquence, n étant supérieur ou égal à 2.

L'invention concerne également un système lidar cohérent comprenant :

- une source cohérente,
- un dispositif d'émission d'un signal optique issu de la source cohérente et un dispositif de réception d'un signal rétrodiffusé par une cible illuminée par le lidar,
- un premier et un deuxième ensemble de détection configurés pour générer respectivement un premier et un deuxième signal de battement, chaque signal de battement étant issu d'une interférence entre un signal d'oscillateur local issu de la source cohérente et le signal rétrodiffusé par la cible,
- une unité de traitement configurée pour numériser le premier et le deuxième signal de battement, et configurée pour déterminer pour une pluralité de n intervalles temporels, n valeurs de densité spectrale correspondant à une transformée dans le domaine fréquentiel de la corrélation croisée entre le premier et le deuxième signal de battement,
- l'unité de traitement étant en outre configurée pour :

*déterminer une valeur moyenne de la densité spectrale à partir des n valeurs de densité spectrale calculées, et
*déterminer une information de localisation de la cible à partir de la valeur moyenne de la densité spectrale.

Selon un mode de réalisation le système lidar cohérent selon l'invention comprend en outre un dispositif de modulation synchronisé avec l'unité de traitement et configuré pour moduler périodiquement en fréquence la source cohérente de sorte que le signal d'oscillateur local présente une fréquence d'oscillateur local constituée de la somme d'une valeur moyenne et d'une fréquence de modulation issue de la modulation de la source, la fréquence de modulation étant périodique selon une période de modulation, chaque période comprenant n parties linéaires présentant respectivement n pentes de fréquence, n étant supérieur ou égal à 2. L'unité de traitement est également configurée pour que les intervalles temporels ti soient inférieurs ou égaux à la période de modulation et pour déterminer une information de distance de la cible à partir de la valeur moyenne de la densité spectrale.

Selon une variante préférée, le premier et/ou le deuxième ensemble de détection sont des détecteurs balancés comprenant chacun un premier et un second détecteur, les premiers détecteurs recevant une différence entre le signal d'oscillateur local et le signal rétrodiffusé, les deuxièmes détecteurs recevant une somme du signal d'oscillateur local et du signal rétrodiffusé. Les premier et deuxième signaux de battement sont issus de la différence des intensités reçues par respectivement le premier et le deuxième détecteur du premier ensemble de détection et le premier et le deuxième détecteur du deuxième ensemble de détection.

Préférentiellement le premier et/ou le deuxième ensemble de détection sont placés de sorte que la longueur des trajets empruntés par chacun des signaux jusqu'auxdits ensembles de détection soit sensiblement égale.

D'autres caractéristiques, buts et avantages de la présente invention apparaîtront à la lecture de la description détaillée qui va suivre et en regard des dessins annexés donnés à titre d'exemples non limitatifs et sur lesquels :

La figure 1 déjà citée décrit le principe d'un lidar cohérent selon l'état de la technique.
La figure 2 déjà citée illustre l'architecture d'un lidar monostatique.
La figure 3 déjà citée illustre la densité de puissance du signal de battement normalisé. Les figures 3a à 3e illustrent l'évolution de celle-ci en fonction du nombre de valeurs n utilisées pour calculer la valeur moyenne.
La figure 4 déjà citée illustre le principe d'une détection équilibrée.
La figure 5 déjà citée illustre l'architecture optique d'un lidar cohérent à modulation de fréquence.
La figure 6a déjà citée illustre la variation au cours du temps des fréquences oscillateur local et signal, et la figure 6b déjà citée illustre la variation au cours du temps de la composante positive du signal de battement.
La figure 7 illustre une autre architecture de lidar cohérent connue de l'homme de l'art.
La figure 8 illustre la méthode de traitement d'un signal issu d'un lidar cohérent selon l'invention.
La figure 9 représente un mode de réalisation préféré de la méthode de traitement selon l'invention.
La figure 10 illustre un exemple d'évolution de la densité spectrale normalisée en fonction de n, les figures 3a, 3b, 3c, 3d et 3e correspondant respectivement à n=1, n=2, n=5, n=10 et n=20.
La figure 11a illustre la variation au cours du temps des fréquences $f_{OL}(t)$ et $f_s(t)$. La figure 11b illustre l'évolution au cours du temps de fs $-f_{OL}$ pour le cas à 4 pentes.
La figure 12 représente un exemple de densité spectrale de puissance normalisée exprimée en dB du signal de battement détecté par un détecteur unique selon l'état de la technique.
La figure 13 représente la densité spectrale de puissance normalisée exprimée en dB du signal de battement pour le même cas que la figure 12, le signal de battement étant détecté par deux ensembles de détection et la densité spectrale de puissance normalisée calculée avec la méthode de traitement selon l'invention.
La figure 14 schématise un système lidar cohérent selon l'invention.
La figure 15 schématise une variante préférée du système lidar cohérent selon l'invention.
La figure 16 schématise une variante préférée du système lidar cohérent selon l'invention compatible d'une détection équilibrée.

## DESCRIPTION DETAILLEE DE L'INVENTION

Avant de décrire l'invention nous allons rappeler certains concepts mathématiques connus de l'homme de l'art et nécessaires à la bonne compréhension de l'invention.

On définit la transformée de Fourier TF d'une fonction temporelle S(t) , exemple de transformée dans le domaine fréquentiel :

$$TF[S(t)] = \int_{-\infty}^{+\infty} S(t).\exp(-2i\pi\nu t)dt$$

On définit le produit de convolution entre deux fonctions temporelles complexes S1(t) et S2(t) :

$$S_1 * S_2 = \int_{-\infty}^{+\infty} S_1(\tau).S_2^*(t-\tau)d\tau \qquad TF[S_1(t)*S_2(t)] = TF[S_1(t)].TF[S_2(t)]$$

S étant un nombre complexe :

$$S = \mathrm{Re}(S) + i\,\mathrm{Im}(S) \text{ et } S^* = \mathrm{Re}(S) - i\,\mathrm{Im}(S)$$

On définit également la fonction de corrélation croisée de $S_1$ et $S_2$ :

$$C_{S_1 S_2} = S_1(t) \otimes S_2(t) = \int_{-\infty}^{+\infty} S_1(t).S_2^*(t-\tau)dt = \int_{-\infty}^{+\infty} S_1(t+\tau).S_2^*(t)dt \qquad (1)$$

Et sa transformée de Fourier :

$$TF\left[C_{S_1 S_2}(\tau)\right] = TF\left[S_1(t)*S_2^*(-t)\right] = TF[S_1(t)] \times TF\left[S_2^*(-t)\right] = TF[S_1(t)] \times \{TF[S_2(t)]\}^* \qquad (2)$$

La fonction de corrélation est maximale quand $S_1$ et $S_2$ sont identiques à un décalage temporel près. $C_{S_1 S_2}$ est alors maximale pour une valeur de $\tau o$ correspondant à ce décalage.

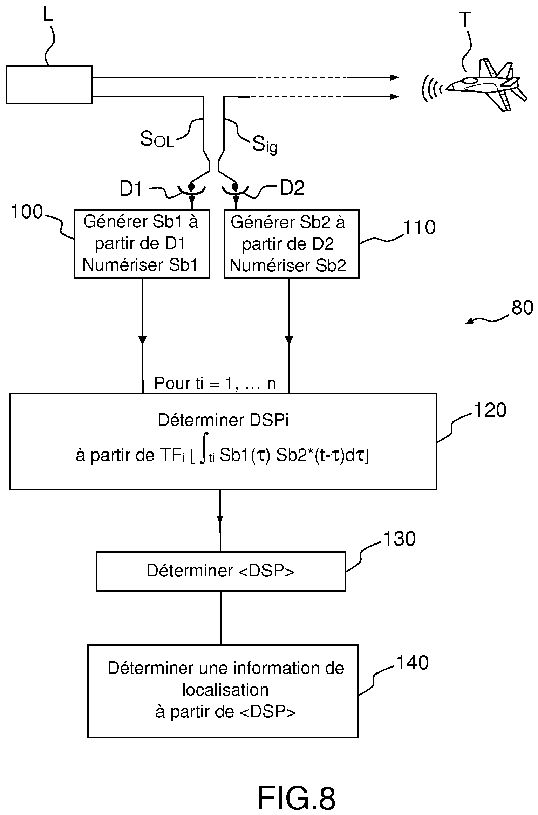

La méthode 80 de traitement d'un signal issu d'un lidar cohérent comprenant une source cohérente L selon l'invention est schématisée figure 8.

La méthode comprend une étape 100 de génération d'un premier signal de battement Sb1 à partir d'un premier ensemble de détection D1, le signal de battement Sb1 étant issu d'une interférence entre un signal d'oscillateur local $S_{OL}$ issu de la source cohérente et un signal rétrodiffusé par une cible Sig éclairée par le lidar. Puis également dans l'étape 100 le signal Sb1 est numérisé à une fréquence d'échantillonnage.

De même une étape 110 consiste à générer un deuxième signal de battement Sb2 à partir d'un deuxième ensemble de détection D2, le signal de battement Sb2 étant issu d'une interférence entre un signal d'oscillateur local $S_{OL}$ issu de la source cohérente et un signal rétrodiffusé par une cible Sig éclairée par le lidar. Puis le signal Sb2 est numérisé.

Pour générer Sb1 et Sb2 une fraction de chaque signal Sig et SOL est dirigée vers les ensembles de détection D1 et D2 comme illustré plus loin.

Puis, pour une pluralité de n intervalles temporels ti indicés i, i variant de 1 à n, une étape 120 détermine n valeurs de densité spectrale correspondantes DSPi, à partir d'une transformée dans le domaine fréquentiel de la corrélation croisée entre le premier signal de battement Sb1 (t) et le deuxième signal de battement Sb2(t).

Pour un intervalle de temps donné ti, cette opération consiste à réaliser une transformée dans le domaine fréquentiel de la fonction de corrélation $C_{Sb1Sb2}$ définie par la formule (1) sur l'intervalle de temps ti considéré.

Typiquement on réalise une transformée de Fourier de $C_{Sb1Sb2}$ tel qu'explicité par la formule (2) sur l'intervalle de temps ti considéré, soit numériquement une FFT pour « Fast Fourier Transform » en anglais.

Selon une variante la densité spectrale calculée DSPi correspond directement à la transformée fréquentielle des signaux temporels de battement:

$$DSPi = TF\left[C_{S_1 S_2}(\tau)\right]$$

Chaque signal de battement Sb1, Sb2 se décompose en un signal d'intérêt S1, S2, et une composante de bruit de photon B1, B2 issus de la détection correspondante D1, D2 :
Sb1 = S1 + B1 et Sb2 = S2 +B2

Selon une autre variante la densité spectrale calculée DSPi correspond à la densité spectrale normalisée par le bruit SPDNi:

$$DSPNi = \frac{DSPi}{B0}$$

Puis dans une étape 130 on détermine une valeur moyenne <DSP> de la densité spectrale à partir des n valeurs DSPi de densité spectrale déterminées pour les intervalles de temps ti.

Préférentiellement, on réalise une moyenne linéaire :

$$\langle DSP \rangle = \frac{1}{n} \sum_i DSPi$$

Enfin dans une étape 140 on détermine une information de localisation de la cible à partir de la valeur moyenne de ladite densité spectrale. Cette information de localisation de la cible est préférentiellement une information de vitesse v, et/ou une information de position (avec un signal émis particulier décrit plus loin), voir une information de simple présence et/ou de vibration (détection des modes propres de vibration d'une cible, qui ne se déplace pas nécessairement).

Avec la méthode 80 selon l'invention, plutôt que de calculer une norme d'une FFT à partir d'un seul signal détecté selon l'état de la technique, on réalise une transformée fréquentielle à partir de la corrélation de deux signaux de battement issus de deux détecteurs différents, ce pour une pluralité d'intervalles de temps ti.

Cette méthode de traitement de signal, et la double détection associée permettent de réduire le plancher de bruit par moyennage, cette réduction s'opérant à la fois sur la variance et sur la valeur moyenne. En effet, les bruits sur chaque détecteur étant principalement liés au bruit de grenaille associé à la puissance de l'oscillateur local, ceux-ci sont essentiellement décorrélés d'un détecteur à l'autre puisqu'ils sont liés à la statistique d'arrivée des photons sur chacun des ensembles de détection D1 et D2.

Au contraire, les signaux d'intérêt S1 et S2 sont identiques. En calculant la corrélation croisée des signaux issus des deux détecteurs, la contribution du bruit en valeur moyenne diminue en fonction du nombre n de densités spectrales moyennées.

Plus précisément, on calcule typiquement pour sur chaque intervalle de temps ti :

$$TF[S_1 + B_1] \times \{TF[S_2 + B_2]\}^* = TF[S_1] \times \{TF[S_2]\}^* + TF[S_1] \times \{TF[B_2]\}^* + TF[B_1] \times \{TF[S_2]\}^* + TF[B_1] \times \{TF[B_2]\}^*$$

$$TF[S_1 + B_1] \times \{TF[S_2 + B_2]\}^* = TF[S_1 \otimes S_2] + TF[S_1 \otimes B_2 + B_1 \otimes S_2 + B_1 \otimes B_2]$$

S1 et S2 sont très fortement corrélés, car issus des même sources et égaux (à un décalage temporel près), tandis que les corrélations croisées de S1 ou S2 avec B1 ou B2 ne comprennent aucun maximum significatif.

Et donc après calcul de la moyenne sur n réalisations, la moyenne :

$$\langle S_1 \otimes B_2 + B_1 \otimes S_2 + B_1 \otimes B_2 \rangle_n$$

va tendre vers 0 (en espérance et en variance). En effet, en moyennant sur n réalisations (n intervalles de temps ti), les produits croisés ci-dessus vont voir leur amplitude réduite. On ne récupère à la fin que la composante d'intérêt correspondant à la transformée de Fourier de la corrélation croisée entre S1 et S2.

Plus précisément, seule la partie réelle positive du produit TF(S1).TF(S2)* est d'intérêt. Les parties négatives et imaginaires font aussi partie des termes parasites qui décroissent avec le nombre de moyennes.

La réduction de l'espérance du bruit (en plus de sa variance) facilite la détection des pics d'intérêt car le contraste C par rapport au niveau de bruit est fortement augmenté. Une augmentation significative de la portée du lidar est ainsi obtenue.

Selon une variante préférée, pratiquement les opérations s'effectuent numériquement par FFT sur les intervalles de temps ti, et on a :

$$DSPi = FFT_{ti}(S1+B1) . FFT_{ti}(S2+B2)^*$$

$$DSPi = FFT(S1).FFT(S2)^* + FFT(S1).FFT(B2)^* + FFT(B1).FFT(S2)^* +$$
$$FFT(B1).FFT(B2)^*$$

De même après une moyenne sur n réalisations seul le terme d'intérêt FFT(S1).FFT(S2)* conserve une amplitude similaire, les autres termes voient leur amplitude se réduire.

En effet, si l'on calcule l'espérance de la norme au carré de la moyenne des DSPi.

$$E\left[\left|\frac{\sum_{i=1}^{n} DSP_i}{n}\right|^2\right] = \frac{1}{n^2} E\left[\left|\sum_{i=1}^{n} DSP_i\right|^2\right]$$

Dans cette somme, les termes impliquant les bruits B1 et B2 peuvent s'écrire sous la forme suivante compte tenu du fait que les bruits B1 et B2 suivent une distribution complexe centrée :

$$E\left[\left|\left(\sum_{i=1}^{n} \frac{a_i \exp(i\varphi_i)}{n}\right)\right|^2\right]$$

Où $a_i$ et $\phi_i$ désignent l'amplitude et la phase des termes impliquant les produits du type FFT(S1).FFT(B2)* ou FFT(B1).FFT(S2)*.

Or, on peut montrer que :

$$E\left[\left|\left(\sum_{i=1}^{n} \frac{a_i \exp(i\varphi_i)}{n}\right)\right|^2\right] < \frac{E\left[\left|a_i\right|^2\right]}{n}$$

Ce majorant décroit clairement vers 0 en fonction de n.

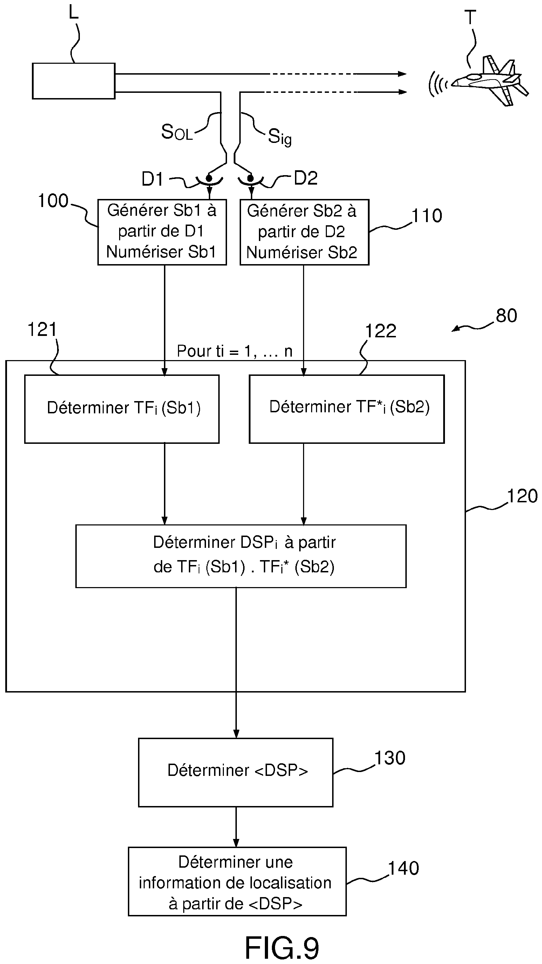

Selon un mode de réalisation préféré illustré figure 9, l'étape de détermination 120 de n valeurs de la densité spectrale DSPi comprend, pour chaque intervalle de temps ti, une sous étape 121 consistant à déterminer une première valeur d'une transformée dans le domaine fréquentiel du premier signal de battement TFi(Sb1) et une sous étape 122 consistant à déterminer une deuxième valeur du conjugué d'une transformée dans le domaine fréquentiel du deuxième signal de battement TFi(Sb2)*, la valeur de la densité spectrale étant calculée à partir du produit des première et deuxième valeurs.

En effet, pour calculer DSPi, transformée dans le domaine fréquentiel de la corrélation croisée entre le premier et le deuxième signal de battement, on peut soit calculer temporellement la corrélation croisée, puis réaliser la transformée fréquentielle de la fonction calculée, soit calculer la transformée fréquentielle de chaque signal de battement détecté (ou de son conjugué) et en faire le produit. Pour optimiser la vitesse de calcul, on choisit préférentiellement cette dernière méthode de calcul.

Selon une variante, chaque DSPi est directement égal audit produit :

$$DSPi = TFi(Sb1).TFi(Sb2)^*.$$

Selon une autre variante préférée, chaque DSPi est égal au produit des transformées de Fourier normalisées par le bruit correspondant :

DSPNi = TFi(Sb1)/B1 .TFi(Sb2)*/B2. avec norme par rapport à B1 et B2

Cela permet de ne pas avoir à adapter le traitement de signal pour l'exploitation des DSPNi par rapport à celui utilisé en l'absence de cette invention. En particulier le calcul des distances et vitesse à partir des DSPNi est alors rigoureusement identique à celui utilisé à partir du SNR pour une architecture mono-détecteur.

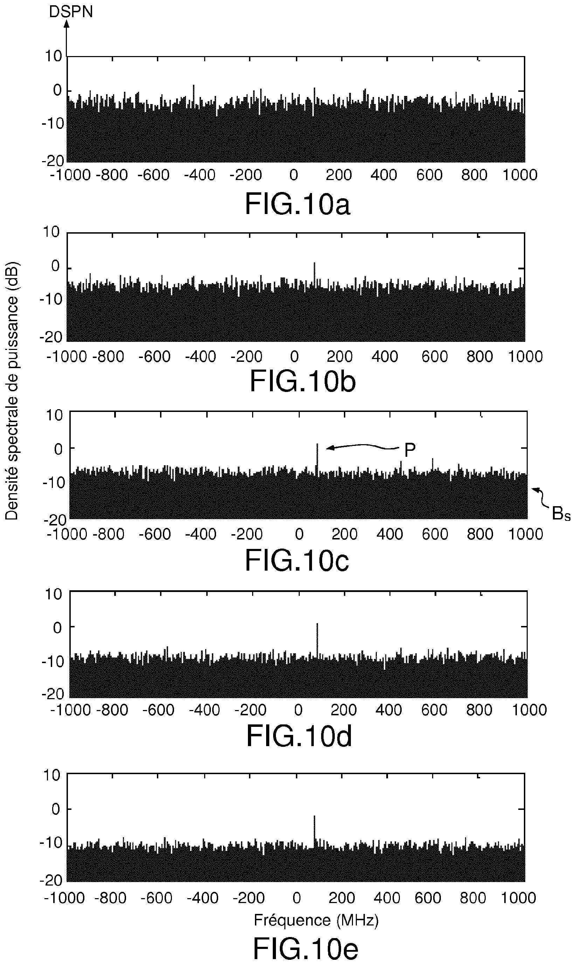

La figure 10 illustre un exemple d'évolution de la densité spectrale normalisée DSPN en fonction de n pour un cas similaire à celui de la figure 3, mais en utilisant la méthode 80 de traitement de signal selon l'invention. Les figures 3a, 3b, 3c 3d et 3e correspondent respectivement à n=1, n=2, n=5, n=10 et n=20. Le pic P se détache du bruit avec les comportements suivants :

- La variance du bruit diminue toujours en 1/n (donc le SNR diminue en 1/n)
- La moyenne du bruit diminue en 1/n. Donc le contraste augmente en n.

La méthode 80 de traitement du signal est compatible d'un lidar à modulation de fréquence.

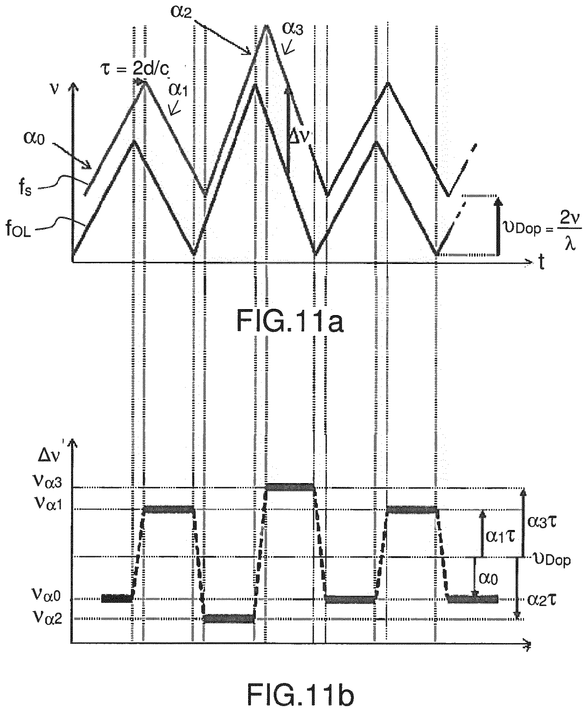

Ainsi selon un mode de réalisation, la source cohérente L du lidar cohérent auquel s'applique la méthode 80 selon l'invention est modulée périodiquement en fréquence de sorte que le signal d'oscillateur local $S_{OL}$ présente une fréquence d'oscillateur local $f_{OL}(t)$ constituée de la somme d'une valeur moyenne f0 et d'une fréquence de modulation $f_{mod}(t)$ issue de la modulation de la source, la fréquence de modulation étant périodique selon une période de modulation $T_{FO}$ (voir plus loin figure 11). Les intervalles temporels ti sont dans ce cas inférieurs ou égaux à la période de modulation pour conserver une même pente de fréquence pendant ti.

La méthode de traitement 80 comprend en outre une étape consistant à déterminer une information de distance d de la cible à partir de la valeur moyenne de la densité spectrale, selon les méthodes classiques de l'état de la technique. La méthode 80 permet d'accroitre la sensibilité de détection des pics de fréquence et donc d'accroitre la portée de l'instrument.

Préférentiellement, chaque période comprend n parties linéaires présentant respectivement n pentes de fréquence ai, n étant supérieur ou égal à 2. Il est connu de l'état de la technique l'utilisation d'un signal à deux pentes.

Pour lever les ambiguïtés associées aux éventuels repliements, on utilise préférentiellement une forme d'onde avec 4 rampes de fréquences $\alpha0$ $\alpha1$, $\alpha2$, $\alpha3$. En effet, la détermination de 4 fréquences caractéristiques conduit à un système de 4 équations, avec 2 inconnues, v et d.

$$\nu_{\alpha_i} = \frac{2\,\mathrm{v}}{\lambda} - \frac{2\alpha_i D}{c}$$

Ceci permet d'obtenir une redondance et donc d'utiliser une des équations pour lever les ambiguïtés associées aux éventuels repliements de spectres et une autre comme paramètre de confiance. Ce paramètre de confiance peut par exemple être le résidu de l'inversion entre les fréquences $\nu_{\alpha i}$ et la vitesse radiale et distance. Cette inversion peut être obtenue par une technique de type moindres carrés, éventuellement pondérée de manière itérative (Iteratively reweighted least squares — IRLS).

La figure 11a illustre la variation au cours du temps des fréquences $f_{OL}(t)$ et $f_s(t)$, la fréquence optique moyenne f0 du laser L ayant été soustraite pour plus de clarté. La figure 11b illustre l'évolution au cours du temps de fs —$f_{OL}$ pour le cas à 4 pentes. On voit sur la figure 10b que cette variation de fréquence au cours du temps présente 4 plateaux correspondant aux 4 fréquences caractéristiques.

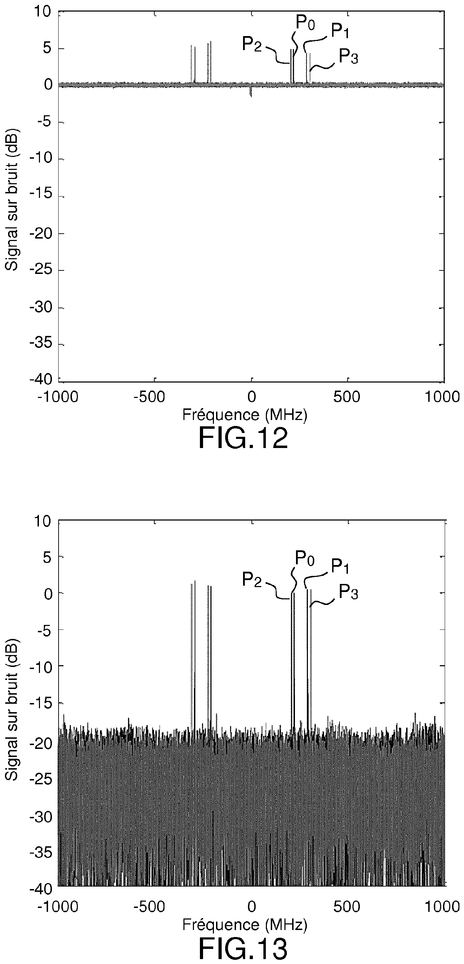

La figure 12 illustre la densité spectrale de puissance DSPN normalisée exprimée en dB et moyennée avec n = 300 et ti = 16.3 $\mu$s, du signal de battement détecté par un détecteur unique D selon l'état de la technique, correspondant au cas d'une cible située à 2507 m et se déplaçant à 200 m/s. La fréquence $f_{mod}$ présentant les valeurs de pentes suivantes (laser de fréquence optique f0 = 1.55 $\mu$m):

$\alpha0$ = 2 MHz/$\mu$s
$\alpha1$ = -2 MHz/$\mu$s
$\alpha2$ = 3 MHz/$\mu$s
$\alpha3$ = -3 MHz/$\mu$s

On détecte 4 pics P0, P1, P2 et P3 correspondant respectivement aux 4 fréquences caractéristiques $\nu_{\alpha0}$, $\nu_{\alpha1}$, $\nu_{\alpha2}$ et $\nu_{\alpha3}$.

Ces pics sont symétriques du fait du caractère réel du signal de battement détecté, qui engendre deux composantes lors du calcul des transformées de Fourier.

La figure 13 illustre la densité de puissance DSPN normalisée exprimée en dB et moyennée avec n = 300 et ti = 16.3 $\mu$s, pour le même cas que précédemment, mais calculée avec la méthode 80 selon l'invention, c'est-à-dire à partir de la transformée de Fourier de la corrélation croisée des signaux de battement S1 et S2 détectés par deux ensembles de détection D1 et D2.

On note sur cet exemple, par comparaison de la figure 13 avec la figure 12 :

- une diminution des pics de signal. Cette réduction est liée à la division du signal et de l'oscillateur local par un facteur 2, du fait de la nécessité d'envoyer une fraction des signaux $S_{OL}$ et Sig (ici la moitié) sur chaque ensemble de détection.

- une réduction de la variance V, et donc de l'écart type du plancher de bruit, qui passe sur cet exemple de 0.024 à 0.005, soit également une réduction de 6 dB en puissance. Le rapport signal sur bruit SNR reste identique au cas de la figure 12.
- une forte augmentation du contraste C de signal par rapport au plancher de bruit : dans cet exemple celui-ci passe de 5.6 dB à 28.8 dB, soit un gain de 23.2 dB.

Par rapport au calcul effectué selon l'état de la technique il convient, pour mettre en œuvre la méthode selon l'invention 80, de réaliser deux FFT au lieu d'une, ce qui allonge légèrement le temps de calcul. De manière pratique le signal de battement est numérisé en temps réel au fil de l'eau et les calculs de traitement de signal sont également réalisés en temps réel au fur et à mesure de l'écoulement du temps, pour une pluralité d'intervalles de temps ti.

Cette nouvelle méthode de traitement 80 (associée à une nouvelle architecture de détection) permet un gain de sensibilité du lidar en particulier si le plancher de bruit, et plus particulièrement sa ligne de base est mal connue, ou (ce qui est souvent le cas) si le plancher de bruit évolue temporellement (même à l'échelle d'une période de modulation $T_{FO}$).

La méthode selon l'invention s'applique à l'ensemble des systèmes lidars cohérents tels que ceux visant à détecter de faibles signaux, et notamment pour les applications suivantes :

- télémétrie/vélocimétrie à longue portée,
- altimétrie
- anémométrie laser.

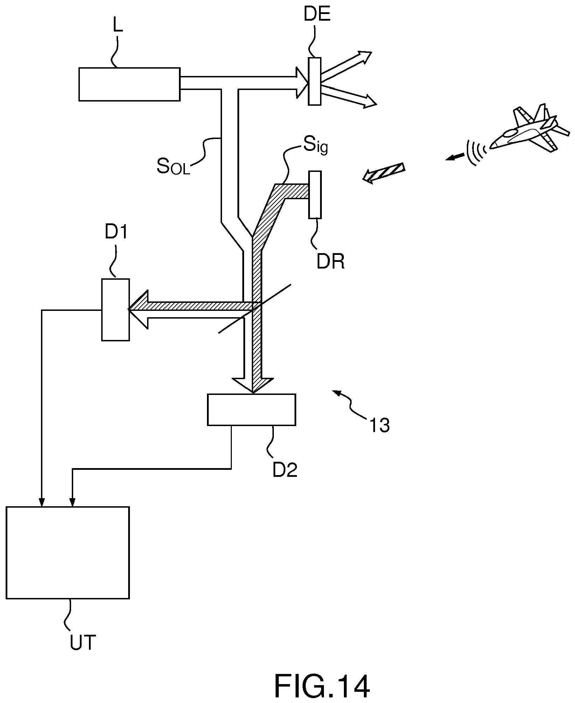

L'invention concerne également un système lidar cohérent 13 illustré figure 14 comprenant :

- une source cohérente L,
- un dispositif d'émission DE d'un signal optique issu de la source cohérente et un dispositif de réception DR d'un signal rétrodiffusé par une cible T illuminée par le lidar,
- un premier ensemble de détection D1 configuré pour générer un premier signal de battement Sb1 issu d'une interférence entre un signal d'oscillateur local $S_{OL}$ issu de la source cohérente et le signal rétrodiffusé Sig par la cible T,
- un deuxième ensemble de détection D2 configuré pour générer un deuxième signal de battement Sb2 issu d'une interférence entre un signal d'oscillateur local $S_{OL}$ issu de la source cohérente et le signal rétrodiffusé Sig par la cible T,
- une unité de traitement UT configurée pour numériser le premier et le deuxième signal de battement, et configurée pour mettre en oeuvre la méthode selon l'invention décrite précédemment, ainsi que préférentiellement ses variantes et modes de réalisation.

Ainsi l'unité de traitement UT est configurée pour :

- déterminer, pour une pluralité de n intervalles temporels ti, n valeurs de densité spectrale DSPi correspondant à une transformée dans le domaine fréquentiel de la corrélation croisée entre le premier et le deuxième signal de battement,

Et pour :

- déterminer une valeur moyenne de la densité spectrale<DSP> à partir des n valeurs de densité spectrale calculées DSPi, et
- déterminer une information de localisation de la cible à partir de la valeur moyenne de la densité spectrale.

Il est entendu que le lidar 13 selon l'invention comprend des composants optiques ou de l'optique intégrée permettant de répartir le signal d'oscillateur local et le signal rétrodiffusé sur deux voies, afin de diriger une fraction de ces signaux sur une première voie vers le premier ensemble de détection et une autre fraction sur une deuxième voie vers le deuxième ensemble de détection.

Il est préférable de séparer les signaux en vue de les envoyer sur les ensembles de détection D1 et D2 après le mélange avec d'oscillateur local de manière à garantir un déphasage identique sur les deux voies en particulier dans le cas d'une fréquence variable au cours du temps.

Si aucune précaution particulière n'est prise sur l'architecture optique de distribution des signaux vers les ensembles de détection D1 et D2, les trajets effectués par les signaux $S_{OL}$ et Sig, à partir d'un point de référence $P_{REF}$ à partir duquel les signaux $S_{OL}$ et Sig sont recombinés et prêts à être détectés, pour arriver respectivement sur le premier et le deuxième ensemble de détection, sont différents. Les signaux de battement résultants Sb1 et Sb2 sont alors décalés temporellement. Dans le cas d'une modulation de fréquence, ce décalage conduit à réduire l'amplitude des pics obtenus lors du calcul de la transformée de Fourier du produit de corrélation.

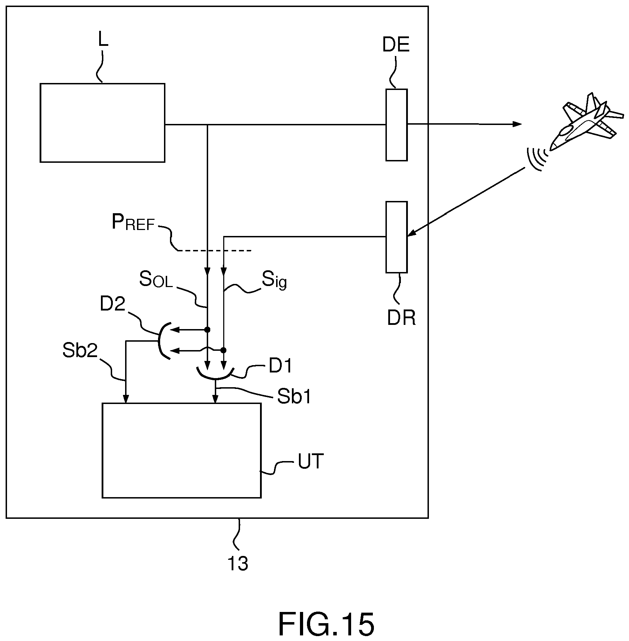

Pour pallier cet inconvénient, préférentiellement le premier ensemble de détection D1 et le deuxième ensemble de détection D2 sont placés de sorte que la longueur des trajets empruntés par chacun des signaux détectés $S_{OL}$ et Sig, à partir d'un point ou d'un plan de référence $P_{REF}$, soit sensiblement égale, tel qu'illustré figure 15. Dans ce cas, les signaux de battement Sb1 et Sb2 sont temporellement égaux.

Sb1(t) = Sb2(t)

Cette condition est remplie exactement si la différence entre les trajets parcourus par $S_{OL}$ et Sig jusqu'à D1 et D2 est très inférieure à la distance que parcourerait la lumière pendant un intervalle de temps égal à l'inverse de la fréquence du signal de battement.

Par exemple pour une fréquence de battement de 100 MHz, correspondant à une période de 10 ns, les trajets sont préférentiellement très inférieurs à 30 cm.

Selon un mode de réalisation le système lidar 13 selon l'invention comprend en outre un dispositif de modulation WFC synchronisé avec l'unité de traitement (UT) configuré pour moduler périodiquement en fréquence la source cohérente L de sorte que le signal d'oscillateur local $S_{OL}$ présente une fréquence d'oscillateur local $f_{OL}(t)$ constituée de la somme d'une valeur moyenne f0 et d'une fréquence de modulation $f_{mod}(t)$ issue de la modulation de la source, la fréquence de modulation étant périodique selon une période de modulation $T_{FO}$, chaque période de la fréquence de modulation comprenant n parties linéaires présentant respectivement n pentes de fréquence ai, n étant supérieur ou égal à 2.

Dans ce mode de réalisation l'unité de traitement est en outre configurée pour que les intervalles temporels ti soient inférieurs ou égaux à la période de modulation $T_{FO}$ et pour déterminer une information de distance d de la cible à partir de la valeur moyenne de la densité spectrale.

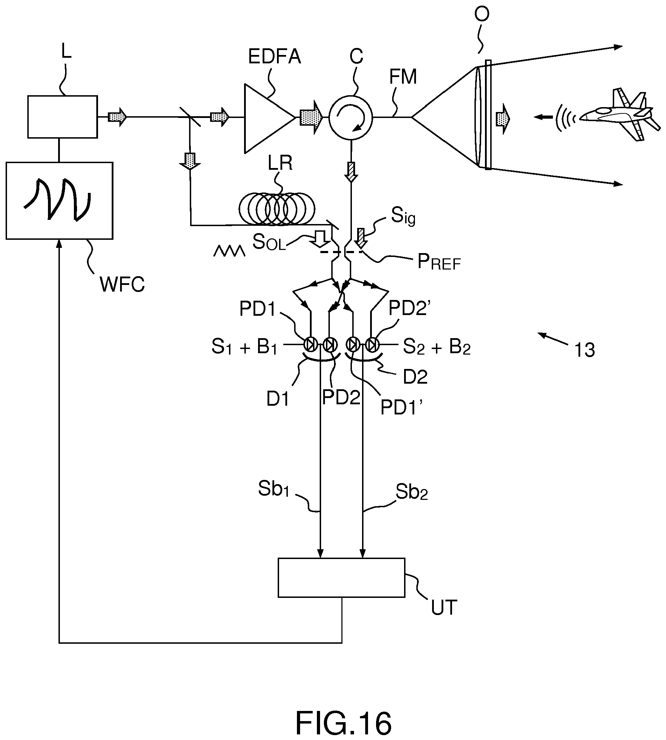

Un exemple d'architecture optique d'un tel lidar cohérent à modulation de fréquence 13 selon l'invention est illustré figure 16.

Le lidar 13 selon l'invention est compatible de l'utilisation d'une détection équilibrée pour les ensembles de détection D1 et D2. Ainsi selon un mode de réalisation également illustré figure 14 pour le cas non limitatif d'un lidar à modulation de fréquence, le premier ensemble de détection D1 et/ou le deuxième ensemble de détection D2 sont des détecteurs balancés comprenant chacun un premier détecteur, PD1 pour D1, PD1' pour D2, et un second détecteur, PD2 pour D1 et PD2 pour D2 configurés pour réaliser une détection balancée.

Ainsi les premiers détecteurs PD1 et PD'1 reçoivent un signal proportionnel à la différence entre le signal d'oscillateur local $S_{OL}$ et le signal rétrodiffusé Sig, et les deuxièmes détecteurs PD2,PD'2 reçoivent une somme du signal d'oscillateur local $S_{OL}$ et du signal rétrodiffusé Sig.

Dans cette configuration, le premier signal de battement Sb1 est issu de la différence des intensités reçues par le premier détecteur PD1 et le deuxième détecteur PD2 du premier ensemble de détection D1, et le deuxième signal de battement Sb2 est issu de la différence des intensités reçues par le premier détecteur PD1' et le deuxième détecteur PD2' du deuxième ensemble de détection D2.

Chacun des modules de calcul que comporte le système selon l'invention et plus particulièrement l'unité de traitement UT peut être réalisé sous forme logicielle et/ou matérielle. Chaque module peut notamment consister en un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

L'invention concerne également un produit programme d'ordinateur comprenant des instructions de code permettant d'effectuer les étapes de la méthode de traitement selon l'invention.

**Revendications**

1. Méthode de traitement (80) d'un signal issu d'un lidar cohérent comprenant une source cohérente (L), la méthode comprenant les étapes consistant à :

   - générer (100, 110) un premier signal de battement (Sb1) et un deuxième signal de battement (Sb2) respectivement à partir d'un premier ensemble de détection (D1) et d'un deuxième ensemble de détection (D2), chaque signal de battement étant issu d'une interférence entre un signal d'oscillateur local ($S_{OL}$) issu de la source cohérente et un signal (Sig) rétrodiffusé par une cible éclairée par le lidar, puis numériser ces signaux de battement,
   - pour une pluralité de n intervalles temporels (ti), déterminer (120) n valeurs respectives de densité spectrale (DSPi) à partir d'une transformée dans le domaine fréquentiel de la corrélation croisée entre le premier et le deuxième signal de battement,

- déterminer (130) une valeur moyenne (<DSP>) de la densité spectrale à partir desdites n valeurs de densité spectrale (DSPi),
- déterminer (140) une information de localisation de la cible à partir de la valeur moyenne de ladite densité spectrale.

**2.** Méthode selon la revendication 1 dans laquelle l'étape de détermination (120) de n valeurs de la densité spectrale comprend les sous étapes consistant à :

- déterminer une première valeur d'une transformée dans le domaine fréquentiel du premier signal de battement (TFi(Sb1)),
- déterminer une deuxième valeur du conjugué d'une transformée dans le domaine fréquentiel du deuxième signal de battement (TFi(Sb2)*),

la valeur de la densité spectrale étant déterminée à partir du produit de la première et de la deuxième valeur.

**3.** Méthode de traitement selon l'une des revendications 1 ou 2 dans laquelle la source cohérente (L) est modulée périodiquement en fréquence de sorte que le signal d'oscillateur local ($S_{OL}$) présente une fréquence d'oscillateur local ($f_{OL}(t)$) constituée de la somme d'une valeur moyenne (f0) et d'une fréquence de modulation ($f_{mod}(t)$) issue de la modulation de la source, la fréquence de modulation étant périodique selon une période de modulation ($T_{FO}$), et dans laquelle les intervalles temporels (ti) sont inférieurs ou égaux à la période de modulation, la méthode de traitement comprenant en outre une étape consistant à déterminer une information de distance (d) de la cible à partir de la valeur moyenne de la densité spectrale.

**4.** Méthode de traitement selon la revendication 3 dans laquelle chaque période de modulation ($T_{FO}$) de la fréquence de modulation comprend n parties linéaires présentant respectivement n pentes de fréquence (ai), n étant supérieur ou égal à 2.

**5.** Système lidar cohérent (13) comprenant :

- une source cohérente (L),
- un dispositif d'émission (DE) d'un signal optique issu de la source cohérente et un dispositif de réception (DR) d'un signal rétrodiffusé par une cible (T) illuminée par le lidar,
- un premier (D1) et un deuxième (D2) ensemble de détection configurés pour générer respectivement un premier (Sb1) et un deuxième (Sb2) signal de battement, chaque signal de battement étant issu d'une interférence entre un signal d'oscillateur local ($S_{OL}$) issu de la source cohérente et le signal rétrodiffusé (Sig) par la cible (T),
- une unité de traitement (UT) configurée pour numériser le premier et le deuxième signal de battement, et configurée pour déterminer pour une pluralité de n intervalles temporels (ti), n valeurs de densité spectrale (DSPi) correspondant à une transformée dans le domaine fréquentiel de la corrélation croisée entre le premier et le deuxième signal de battement,
- l'unité de traitement étant en outre configurée pour :

*déterminer une valeur moyenne de la densité spectrale à partir des n valeurs de densité spectrale calculées, et

*déterminer une information de localisation de la cible à partir de la valeur moyenne de la densité spectrale.

**6.** Système lidar cohérent (13) selon la revendication 5 comprenant en outre un dispositif de modulation (WFC) synchronisé avec l'unité de traitement (UT) et configuré pour moduler périodiquement en fréquence la source cohérente (L) de sorte que le signal d'oscillateur local ($S_{OL}$) présente une fréquence d'oscillateur local ($f_{OL}(t)$) constituée de la somme d'une valeur moyenne (f0) et d'une fréquence de modulation ($f_{mod}(t)$) issue de la modulation de la source, la fréquence de modulation étant périodique selon une période de modulation ($T_{FO}$), chaque période comprenant n parties linéaires présentant respectivement n pentes de fréquence (ai), n étant supérieur ou égal à 2, et dans lequel l'unité de traitement (UT) est en outre configurée pour que les intervalles temporels ti soient inférieurs ou égaux à la période de modulation et pour déterminer une information de distance (d) de la cible à partir de la valeur moyenne de la densité spectrale.

**7.** Système lidar selon l'une des revendications 5 ou 6 dans lequel le premier et/ou le deuxième ensemble de détection (D1, D2) sont des détecteurs balancés comprenant chacun un premier (PD1, PD1') et un second (PD2, PD2') détecteur,

les premiers détecteurs (PD1, PD'1) recevant une différence entre le signal d'oscillateur local ($S_{OL}$) et le signal rétrodiffusé (Sig),

les deuxièmes détecteurs (PD2,PD'2) recevant une somme du signal d'oscillateur local ($S_{OL}$) et du signal rétrodiffusé (Sig),

les premier et deuxième signaux de battement (Sb1, Sb2) étant issus de la différence des intensités reçues par respectivement le premier (PD1) et le deuxième (PD2) détecteur du premier ensemble de détection (D1) et le premier (PD1') et le deuxième (PD2') détecteur du deuxième (D2) ensemble de détection.

8. Système lidar selon l'une des revendications 5 à 7 dans lequel le premier et le deuxième ensemble de détection (D1, D2) sont placés de sorte que la longueur des trajets empruntés par chacun des signaux jusqu'auxdits ensembles de détection soit sensiblement égale.

9. Un produit programme d'ordinateur, ledit programme d'ordinateur comprenant des instructions de code permettant d'effectuer les étapes de la méthode de traitement selon l'une quelconque des revendications 1 à 4.

**Patentansprüche**

1. Verfahren zum Verarbeiten (80) eines Signals von einem kohärenten Lidar, der eine kohärente Quelle (L) umfasst, wobei das Verfahren die folgenden Schritte umfasst:

- Erzeugen (100, 110) eines ersten Schwebungssignals (Sb1) und eines zweiten Schwebungssignals (Sb2) jeweils aus einem ersten Detektionssatz (D1) bzw. einem zweiten Detektionssatz (D2), wobei jedes Schwebungssignal von einer Interferenz zwischen einem lokalen Oszillatorsignal ($S_{OL}$) von der kohärenten Quelle und einem Signal (Sig), das von einem durch das Lidar beleuchtete Ziel zurückgestreut wird, erzeugt wird, danach Digitalisieren dieser Schwebungssignale,
- Bestimmen (120), für eine Mehrzahl von n Zeitintervallen (ti), von n jeweiligen Spektraldichtewerten (DSPi) aus einer Transformation in der Frequenzdomäne der Kreuzkorrelation zwischen dem ersten und dem zweiten Schwebungssignal,
- Bestimmen (130) eines Mittelwertes (<DSP>) der Spektraldichte aus den n Spektraldichtewerten (DSPi),
- Bestimmen (140) von Standortinformationen über das Ziel aus dem Mittelwert der Spektraldichte.

2. Verfahren nach Anspruch 1, wobei der Schritt des Bestimmens (120) von n Werten der Spektraldichte die folgenden Teilschritte umfasst:

- Bestimmen eines ersten Wertes einer Transformation in der Frequenzdomäne des ersten Schwebungssignals (TFi(Sbl)),
- Bestimmen eines zweiten Wertes der Konjugierten einer Transformation in der Frequenzdomäne des zweiten Schwebungssignals (TFi(Sb2)*),

wobei der Wert der Spektraldichte aus dem Produkt des ersten und des zweiten Werts bestimmt wird.

3. Verarbeitungsverfahren nach einem der Ansprüche 1 oder 2, wobei die kohärente Quelle (L) periodisch frequenzmoduliert wird, so dass das lokale Oszillatorsignal ($S_{OL}$) eine lokale Oszillatorfrequenz ($f_{OL}(t)$) aufweist, die aus der Summe aus einem Mittelwert (f0) und einer Modulationsfrequenz ($f_{mod}(t)$) aus der Modulation der Quelle gebildet wird, wobei die Modulationsfrequenz gemäß einer Modulationsperiode ($T_{FO}$) periodisch ist, und wobei die Zeitintervalle (ti) genauso groß wie oder kleiner als die Modulationsperiode sind, wobei das Verarbeitungsverfahren ferner einen Schritt des Bestimmens einer Information der Entfernung (d) zum Ziel aus dem Mittelwert der Spektraldichte umfasst.

4. Verarbeitungsverfahren nach Anspruch 3, wobei jede Modulationsperiode ($T_{FO}$) der Modulationsfrequenz n lineare Teile mit jeweils n Frequenzsteilheiten (ai) umfasst, wobei n gleich oder größer 2 ist.

5. Kohärentes Lidar-System (13), das Folgendes umfasst:

- eine kohärente Quelle (L),

- ein Gerät (DE) zum Senden eines optischen Signals von der kohärenten Quelle und ein Gerät (DR) zum Empfangen eines Signals, das von einem durch das Lidar beleuchtete Ziel (T) zurückgestreut wird,
- einen ersten (D1) und einen zweiten (D2) Detektionssatz, konfiguriert zum Erzeugen jeweils eines ersten (Sb1) und eines zweiten (Sb2) Schwebungssignals, wobei jedes Schwebungssignal aus einer Interferenz zwischen einem lokalen Oszillatorsignal ($S_{OL}$) von der kohärenten Quelle und dem von dem Ziel (T) zurückgestreuten Signal (Sig) erzeugt wird,
- eine Verarbeitungseinheit (UT), konfiguriert zum Digitalisieren der ersten und zweiten Schwebungssignale und konfiguriert zum Bestimmen, für eine Mehrzahl von n Zeitintervallen (ti), von n Spektraldichtewerten (DSPi), die einer Frequenzdomänentransformation der Kreuzkorrelation zwischen dem ersten und zweiten Schwebungssignal entsprechen,
- wobei die Verarbeitungseinheit ferner konfiguriert ist zum:

  ∗ Bestimmen eines Mittelwertes der Spektraldichte aus den n berechneten Spektraldichtewerte, und
  ∗ Bestimmen einer Standortinformation über das Ziel aus dem Mittelwert der Spektraldichte.

6. Kohärentes Lidarsystem (13) nach Anspruch 5, das ferner ein Modulationsgerät (WFC) umfasst, das mit der Verarbeitungseinheit (UT) synchronisiert und zum periodischen Frequenzmodulieren der kohärenten Quelle (L) konfiguriert ist, so dass das lokale Oszillatorsignal ($S_{OL}$) eine lokale Oszillatorfrequenz ($f_{OL}(t)$) aufweist, die aus der Summe aus einem Mittelwert (f0) und einer Modulationsfrequenz ($f_{mod}(t)$) aus der Modulation der Quelle erzeugt ist, wobei die Modulationsfrequenz periodisch gemäß einer Modulationsperiode ($T_{FO}$) ist, wobei jede Periode n lineare Teile mit jeweils n Frequenzsteilheiten (ai) umfasst, wobei n gleich oder größer 2 ist, und wobei die Verarbeitungseinheit (UT) ferner so konfiguriert ist, dass die Zeitintervalle ti genauso groß wie oder kleiner als die Modulationsperiode sind, und zum Bestimmen einer Information über die Entfernung (d) zum Ziel aus dem Mittelwert der Spektraldichte.

7. Lidarsystem nach einem der Ansprüche 5 oder 6, wobei der erste und/oder der zweite Detektionssatz (D1, D2) ausgeglichene Detektoren sind, die jeweils einen ersten (PD1, PD1') und einen zweiten (PD2, PD2') Detektor umfassen,

   wobei die ersten Detektoren (PD1, PD'1) eine Differenz zwischen dem Signal des lokalen Oszillators ($S_{OL}$) und dem rückgestreuten Signal (Sig) empfangen,
   wobei die zweiten Detektoren (PD2, PD'2) eine Summe aus dem Signal des lokalen Oszillators ($S_{OL}$) und dem rückgestreuten Signal (Sig) empfangen,
   wobei das erste und zweite Schwebungssignal (Sb1, Sb2) aus der Differenz der Intensitäten erzeugt werden, die jeweils vom ersten (PD1) und zweiten (PD2) Detektor des ersten Detektionssatzes (D1) und dem ersten (PD1') und zweiten (PD2') Detektor des zweiten Detektionssatzes (D2) empfangen werden.

8. Lidarsystem nach einem der Ansprüche 5 bis 7, wobei der erste und der zweite Detektionssatz (D1, D2) so platziert sind, dass die Weglängen, denen jedes der Signale zu den Detektionssätzen folgt, im Wesentlichen gleich sind.

9. Computerprogrammprodukt, wobei das Computerprogramm Codebefehle umfasst, die die Durchführung der Schritte des Verarbeitungsverfahrens nach einem der Ansprüche 1 bis 4 ermöglichen.

**Claims**

1. A method for processing (80) a signal generated by a coherent lidar comprising a coherent source (L), the method comprising the steps of:

   - generating (100, 110) a first beat signal (Sb1) and a second beat signal (Sb2) from a first detection assembly (D1) and a second detection assembly (D2) respectively, each beat signal being generated by interference between a local-oscillator signal ($S_{OL}$) generated by the coherent source and a signal (Sig) backscattered by a target illuminated by the lidar, then digitizing these beat signals,
   - for a plurality of n time intervals (ti), determining (120) n respective spectral-density values (SPDi) from a transform in the frequency domain of the cross-correlation between the first and second beat signals,
   - determining (130) an average value (<SPD>) of the spectral density from said n spectral-density values (SPDi),
   - determining (140) a piece of target location information from the average value of said spectral density.

2. The method according to claim 1, wherein the step of determining (120) n spectral-density values comprises the substeps of:

   - determining a first value of a transform in the frequency domain of the first beat signal (FTi(Sb1)),
   - determining a second value of the conjugate of a transform in the frequency domain of the second beat signal (FTi(Sb2)*),

   the spectral-density value being determined from the product of the first and second values.

3. The processing method according to any one of claims 1 or 2, wherein the coherent source (L) is periodically frequency modulated so that the local-oscillator signal ($S_{OL}$) has a local-oscillator frequency ($f_{OL}(t)$) consisting of the sum of an average value (f0) and of a modulation frequency ($f_{mod}(t)$) that is generated by modulating the source, the modulation frequency being periodic over a modulation period ($T_{FO}$), and wherein the time intervals (ti) are shorter than or equal to the modulation period, the processing method further comprising a step consisting in determining a piece of information regarding the distance (d) of the target from the average value of the spectral density.

4. The processing method according to claim 3, wherein each modulation period ($T_{FO}$) of the modulation frequency comprises n linear portions having n frequency slopes ($\alpha i$) respectively, n being higher than or equal to 2.

5. A coherent-lidar system (13) comprising:

   - a coherent source (L),
   - a device (DE) for emitting an optical signal generated by the coherent source and a device (DR) for receiving a signal backscattered by a target (T) illuminated by the lidar,
   - a first detection assembly (D1) and a second detection assembly (D2), which are configured to generate a first beat signal (Sb1) and a second beat signal (Sb2) respectively, each beat signal being generated by interference between a local-oscillator signal ($S_{OL}$) generated by the coherent source and the signal (Sig) backscattered by the target (T),
   - a processing unit (UT) configured to digitize the first and second beat signals, and configured to determine, for a plurality of n time intervals (ti), n spectral-density values (SPDi) corresponding to a transform in the frequency domain of the cross-correlation between the first and second beat signals,
   - the processing unit being further configured to:

     * determine an average value of the spectral density from the n computed spectral-density values, and
     * determine a piece of target location information from the average value of the spectral density.

6. The coherent-lidar system (13) according to claim 5, further comprising a modulating device (WFC) synchronized with the processing unit (UT) and configured to periodically frequency modulate the coherent source (L) so that the local-oscillator signal ($S_{OL}$) has a local-oscillator frequency ($f_{OL}(t)$) consisting of the sum of an average value (f0) and of a modulation frequency ($f_{mod}(t)$) that is generated by the modulation of the source, the modulation frequency being periodic over a modulation period ($T_{FO}$), each period comprising n linear portions having n frequency slopes ($\alpha i$) respectively, n being higher than or equal to 2, and wherein the processing unit (UT) is further configured so that the time intervals ti are shorter than or equal to the modulation period, and to determine a piece of information regarding the distance (d) of the target from the average value of the spectral density.

7. The lidar system according to any one of claims 5 or 6, wherein the first and/or second detection assembly (D1, D2) are balanced detectors, each comprising a first detector (PD1, PD1') and a second detector (PD2, PD2'),

   the first detectors (PD1, PD'1) receiving a difference between the local-oscillator signal ($S_{OL}$) and the backscattered signal (Sig),
   the second detectors (PD2, PD'2) receiving a sum of the local-oscillator signal ($S_{OL}$) and of the backscattered signal (Sig),
   the first and second beat signals (Sb1, Sb2) being generated from the difference between the intensities received by the first detector (PD1) and the second detector (PD2) of the first detection assembly (D1) and the first detector (PD1') and second detector (PD2') of the second detection assembly (D2) respectively.

8. The lidar system according to one of claims 5 to 7, wherein the first and second detection assemblies (D1, D2) are placed so that the length of the paths followed by each of the signals to said detection assemblies are substantially equal.

9. A computer program product, said computer program comprising code instructions allowing the steps of the processing method according to any one of claims 1 to 4 to be performed.

FIG.1

FIG.2

FIG.3a

FIG.3b

FIG.3c

FIG.3d

FIG.3e

$B_{OL} \ll S_{OL}$

$S_{ig}$

$S_{OL}$

$\frac{1}{2}(S_{ig} + S_{OL} + B_{OL})$

PD1

+V

D

$I = I_{PD1} - I_{PD2}$

$\frac{1}{2}(S_{ig} - S_{OL} - B_{OL})$

PD2

-V

## FIG.4

L

EDFA

C

FM

O

$v$

WFC

LR

$f_{OL} \, \text{\large\sf M} \, S_{OL}$

$S_{ig}$

PD1

PD2

D

Sb

20

UT

## FIG.5

FIG.6a

FIG.6b

FIG.7

L

T

$S_{OL}$   $S_{ig}$

D1   D2

| 100 — Générer Sb1 à partir de D1 Numériser Sb1 | Générer Sb2 à partir de D2 Numériser Sb2 — 110 |

— 80

Pour ti = 1, … n

Déterminer DSPi

à partir de TFᵢ [ ∫ti Sb1(τ) Sb2*(t-τ)dτ]   — 120

Déterminer <DSP>   — 130

Déterminer une information de localisation à partir de <DSP>   — 140

## FIG.8

L

T

$S_{OL}$     $S_{ig}$

D1     D2

| | |
|---|---|
| 100 Générer Sb1 à partir de D1 Numériser Sb1 | Générer Sb2 à partir de D2 Numériser Sb2 110 |

80

121     122

Pour ti = 1, ... n

| | |
|---|---|
| Déterminer $TF_i$ (Sb1) | Déterminer $TF^*_i$ (Sb2) |

Déterminer $DSP_i$ à partir
de $TF_i$ (Sb1) . $TF_i^*$ (Sb2)

120

Déterminer <DSP>     130

Déterminer une
information de localisation
à partir de <DSP>     140

FIG.9

FIG.10a

FIG.10b

FIG.10c

FIG.10d

Fréquence (MHz)

FIG.10e

FIG.11a

FIG.11b

FIG.12

FIG.13

**FIG.14**

FIG.15

**FIG.16**

# EP 3 563 178 B1

## RÉFÉRENCES CITÉES DANS LA DESCRIPTION

**Documents brevets cités dans la description**

- US 20150293211 A1

**Littérature non-brevet citée dans la description**

- **FARZIN AMZAJERDIAN et al.** Lidar systems for precision navigation and safe landing on planetary bodies. *Proc. SPIE 8192, International Symposium on Photoelectronic Détection and Imaging 2011: Laser Sensing and Imaging; and Biological and Médical Applications of Photonics Sensing and Imaging,* 19 Août 2011, 819202